# EUROPEAN PATENT SPECIFICATION

(11) **EP 4 292 001 B1**
(45) Date of publication and mention of the grant of the patent: **14.10.2026**
(21) Application number: 22753262.9
(22) Date of filing: 09.02.2022
(51) Int. Cl.: G06F 21/44, G06F 21/60, G06F 21/71, G06N 20/00

(54) **SYSTEMS AND METHODS FOR HARDWARE DEVICE FINGERPRINTING**
SYSTEME UND VERFAHREN FÜR HARDWARE-VORRICHTUNGSFINGERABDRUCK
SYSTÈMES ET PROCÉDÉS DE DÉTERMINATION D'EMPREINTES DE DISPOSITIFS MATÉRIELS

(30) Priority: 10.02.2021 GB 202101808
(43) Date of publication of application: 20.12.2023
(73) Proprietor: Callsign, Inc., Palo Alto, CA 94306 (US); Patel, Yogesh Kumar Jitendra, London EC1A 7BL (GB)
(72) Inventor: PATEL, Yogesh Kumar Jitendra, London EC1A 7BL (GB)
(74) Representative: Murgitroyd & Company
(86) International application number: PCT/US2022/015814
(87) International publication number: WO 2022/173825

(56) References cited:
- US-A1- 2018 359 244
- US-A1- 2019 306 182
- US-A1- 2020 019 867
- US-A1- 2020 067 777
- US-A1- 2020 076 799
- US-A1- 2020 193 315
- UMAR IQBAL ET AL: "Fingerprinting the Fingerprinters: Learning to Detect Browser Fingerprinting Behaviors", ARXIV.ORG, CORNELL UNIVERSITY LIBRARY, 201 OLIN LIBRARY CORNELL UNIVERSITY ITHACA, NY 14853, 11 August 2020 (2020-08-11), XP081738034
- VASTEL ANTOINE ET AL: "FP-STALKER: Tracking Browser Fingerprint Evolutions", 2018 IEEE SYMPOSIUM ON SECURITY AND PRIVACY (SP), IEEE, 20 May 2018 (2018-05-20), pages 728 - 741, XP033377764, DOI: 10.1109/SP.2018.00008

## Description

### CROSS-REFERENCE

This application claims priority to U.K. Patent Application No. 2101808.0, filed on February 10, 2021.

### BACKGROUND

A device identifier, or DeviceID, uniquely identifies a device generally connected to the Internet. Determining a unique DeviceID using information from web browsers may be difficult, as web browsers often do not expose much identifying information. In addition, application programming interfaces (APIs) implemented by browsers, such as Web API, are constantly being updated or deprecated (i.e. Battery API) in an effort towards enhanced privacy or closing security vulnerabilities. Further, browser implementations may vary by vendor, as APIs available on one browser may not be available on other browsers. Furthermore, hardware-based device fingerprinting is challenging because it may require identifying hardware attributes that differentiate one device from another, while only being able to retrieve information by particular APIs implemented by the browser. UMAR IQBAL ET AL: "Fingerprinting the Fingerprinters: Learning to Detect Browser Fingerprinting Behaviors",ARXIV.ORG, CORNELL UNIVERSITY LIBRARY, 201 OLIN LIBRARY CORNELL UNIVERSITY ITHACA, NY 14853, 11 August 2020 (2020-08-11), is part of the prior-art.

### SUMMARY

The present disclosure provides systems and methods for producing a consistent unique device identifier (DeviceID) based on the hardware and software analysis on different browsers. In many cases, producing a DeviceID involves using a digital fingerprinting technique such as user agent-based fingerprinting, network-based fingerprinting, web rendering fingerprinting, cookie-based fingerprinting, or audio-based fingerprinting. Use of one of these methods in isolation to produce a DeviceID may yield suboptimal identification results, such as collisions (e.g., different devices yielding the same fingerprint) or inconsistencies (e.g., a particular device yielding a different fingerprint at different times) when attempted using different browsers on the a particular device. The disclosed system combines these methods to produce attributes that may be analyzed using machine learning algorithms on client and server-side devices. Combining the methods in this manner may produce more robust results than use of each technique individually.

In one aspect, the present disclosure provides a method for uniquely identifying a hardware device. The method may comprise (a) obtaining a first partial key and a plurality of encrypted parameters from a database implemented on the hardware device and a second partial key from a remote server; (b) decrypting the plurality of encrypted parameters using the first partial key and the second partial key, to thereby generate a plurality of decrypted parameters; (c) obtaining a plurality of attributes of the hardware device, wherein the plurality of attributes comprises a state of a central processing unit (CPU) or a graphics processing unit (GPU) of the hardware device; (d) processing, on the hardware device, the plurality of attributes with a first machine learning algorithm to generate a digital fingerprint of the hardware device, wherein the first machine learning algorithm comprises the plurality of decrypted parameters; and (e) processing, on the remote server, at least the digital fingerprint of the hardware device and the plurality of attributes with a second machine learning algorithm configured to determine whether the hardware device has been previously identified.

In some embodiments, the method further comprises, prior to (c), executing a function on the CPU or the GPU of the hardware device through an application programming interface (API) of a web browser. In some embodiments, the method further comprises, subsequent to executing the function, identifying the state of the CPU or the GPU. In some embodiments, the function is selected from the group of consisting of a polynomial function, a random number generator, a matrix function, and a combination thereof. In some embodiments, the function is a graphics rendering function. In some embodiments, the function is a physical unclonable function.

In some embodiments, the state of the CPU or GPU comprises a state of a storage component of the CPU or GPU. In some embodiments, the state of the CPU or GPU comprises a state of a logic component of the CPU or GPU.

In some embodiments, the plurality of attributes comprises an attribute of software running on the hardware device. In some embodiments, the software is a web browser. In some embodiments, the attribute is selected from the group consisting of a user-agent string, a color depth, a memory, a CPU allocation, and a time zone. In some embodiments, the plurality of attributes comprises an audio attribute comprising a parameter required to trigger an audio API. In some embodiments, the plurality of attributes number of iterations of the function or a number of bytes allocated per iteration.

In some embodiments, the first machine learning algorithm is an unsupervised machine learning algorithm. In some embodiments, the unsupervised machine learning algorithm is an autoencoder. In some embodiments, the method further comprises, prior to (e), transmitting the digital fingerprint and the plurality of attributes to the remote server. In some embodiments, the second machine learning algorithm is configured to generate a score that indicates a similarity between the hardware device and a previously identified hardware device. In some embodiments, the method further comprises, if the hardware device has not been previously identified, generating a unique device identifier for the hardware device. In some embodiments, the second machine learning algorithm is a classifier. In some embodiments, the second machine learning algorithm is a clustering algorithm. In some embodiments, the database is implemented via a web browser API. In some embodiments, the first machine learning algorithm comprises a noise reduction algorithm.

Another aspect of the present disclosure provides a non-transitory computer readable medium comprising machine executable code that, upon execution by one or more computer processors, implements any of the methods above or elsewhere herein.

Another aspect of the present disclosure provides a system comprising one or more computer processors and computer memory coupled thereto. The computer memory comprises machine executable code that, upon execution by the one or more computer processors, implements any of the methods above or elsewhere herein.

Additional aspects and advantages of the present disclosure will become readily apparent to those skilled in this art from the following detailed description, wherein only illustrative embodiments of the present disclosure are shown and described. As will be realized, the present disclosure is capable of other and different embodiments, and its several details are capable of modifications in various obvious respects, all without departing from the disclosure. Accordingly, the drawings and description are to be regarded as illustrative in nature, and not as restrictive. The invention is as defined in the appended claims.

### BRIEF DESCRIPTION OF THE DRAWINGS

The novel features of the invention are set forth with particularity in the appended claims. A better understanding of the features and advantages of the present invention will be obtained by reference to the following detailed description that sets forth illustrative embodiments, in which the principles of the invention are utilized, and the accompanying drawings (also "Figure" and "FIG." herein), of which:
**FIG. 1** schematically illustrates a system for uniquely identifying a computing device, in accordance with some embodiments of the present disclosure;
**FIG. 2** illustrates a block diagram of the client device, in accordance with some embodiments of the present disclosure;
**FIG. 3** illustrates a block diagram of the server device, in accordance with some embodiments of the present disclosure;
**FIG. 4** illustrates a process flow diagram for determining a unique identifier for a device, in accordance with some embodiments of the present disclosure;
**FIG. 5** illustrates a process flow diagram for a sub-process, in accordance with some embodiments of the present disclosure; and
**FIG. 6** shows a computer system that is programmed or otherwise configured to implement methods provided herein.

### DETAILED DESCRIPTION

While various embodiments of the invention have been shown and described herein, it will be obvious to those skilled in the art that such embodiments are provided by way of example only. Numerous variations, changes, and substitutions may occur to those skilled in the art without departing from the invention. It should be understood that various alternatives to the embodiments of the invention described herein may be employed.

Whenever the term "at least," "greater than," or "greater than or equal to" precedes the first numerical value in a series of two or more numerical values, the term "at least," "greater than" or "greater than or equal to" applies to each of the numerical values in that series of numerical values. For example, greater than or equal to 1, 2, or 3 is equivalent to greater than or equal to 1, greater than or equal to 2, or greater than or equal to 3.

Whenever the term "no more than," "less than," or "less than or equal to" precedes the first numerical value in a series of two or more numerical values, the term "no more than," "less than," or "less than or equal to" applies to each of the numerical values in that series of numerical values. For example, less than or equal to 3, 2, or 1 is equivalent to less than or equal to 3, less than or equal to 2, or less than or equal to 1.

The disclosed system determines a unique identifier for a client device by analyzing information from hardware and software components. The disclosed system can use technologies such as HTML5, Web Assembly, and WebGL to perform the analysis. The system can use information from multiple web browsers running on the device in order to perform the analysis.

The disclosed system can determine device attributes from the web browsers, including, for example, data points retrieved from the central processing unit (CPU) and/or graphics processing unit (GPU) of the device, and from cryptographic, software, audio, and other contextual information. The disclosed system may profile features of the central processing unit (CPU) or graphics processing unit (GPU) to determine a unique identifier of the device. For example, the system can determine the presence of an Advanced Encryption System New Standard (AES-NI) instruction giving hardware-level support for an AES block cypher or identification of particular device features by crafting specific graphics that a user's browser may render. The system can also determine additional attributes, or device fingerprints, by implementing functions. These functions may be matrix functions, measurement functions, or other functions.

The system can use machine learning on the captured information to determine the unique device identifier. First, the attributes and function outputs may be analyzed by a machine learning algorithm on the client device, which may produce a unique score. Next, the score and attributes are provided to a server device. The server device may pre-process the data before implementing another machine learning algorithm to determine whether the device has already been registered by the system. If not, the server can generate a new device identifier for the client device.

The use of many types of attributes, as well as performing machine learning to first determine a unique value for the device and then to determine whether it is a new device, may add robustness to the identifier system. These elements may remove much of the uncertainty from the use of multiple browsers and from unreliable measurements that arise when systems analyze just one type of attribute.

The disclosed system may have a number of applications, from advertising (e.g., ad tracking) and marketing to controlling digital rights management to fighting bank fraud. With regard to ad tracking, the method of fingerprinting disclosed may be used to accurately identify and report returning visitors to a web page. Similar fingerprints may help to provide personalized advertising to clusters of similar users. Additionally, device fingerprints may identify whether Internet banking sessions have been hijacked or identify credit card fraud. The fingerprints may help to determine if multiple requests have been made by the same device, but using a proxy, different credit card, or fake Internet Protocol (IP) address. Additionally, device fingerprints of the type created by the system may help to combat electronic commerce (eCommerce) fraud. The fingerprints may help to determine whether an order is coming from a fraudster and should be canceled.

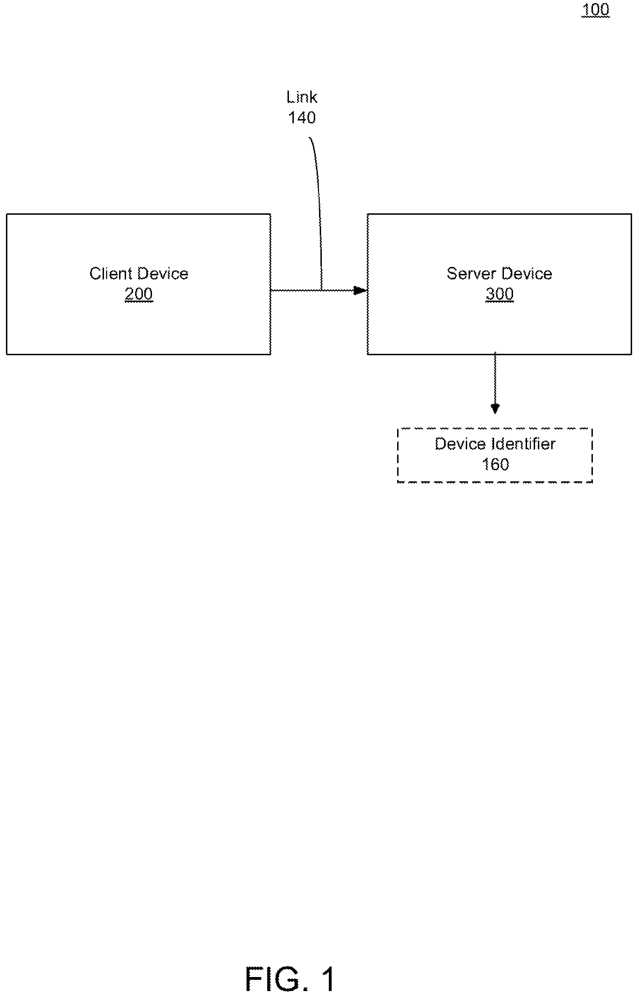

**FIG. 1** schematically illustrates a system 100 for uniquely identifying a hardware device, in accordance with some embodiments of the present disclosure. The system 100 includes a client device 200 and a server device 300 and produces a device identifier 160. The client device 200 and the server device 300 may be distinct devices or they may be the same device.

The client device 200 is a computing device for which the system procures the device identifier 160. The client device may be a desktop or mobile computing device (e.g., a smartphone, tablet, or personal digital assistant (PDA)). The client device 200 may receive data regarding the graphics processing unit (GPU), the central processing unit (CPU), software information, audio information, and other contextual information as inputs. The client device may implement a machine learning algorithm to produce a score for the client device 200, as well as a set of contexts to be provided to the server device 300.

The server device 300 may be a computing device that determines whether the system has registered the device previously. The server device 300 may do this using a machine learning algorithm that analyzes the score and the set of contexts.

The link 140 may electronically couple the client device 200 and the server device 300. The link 140 may be a universal serial bus (USB) connection, another type of serial connection (e.g., RS-232), or an Ethernet link. The link 140 may be part of a network, such as a Wi-Fi network, a local area network (LAN), a wide area network (WAN), or another type of network.

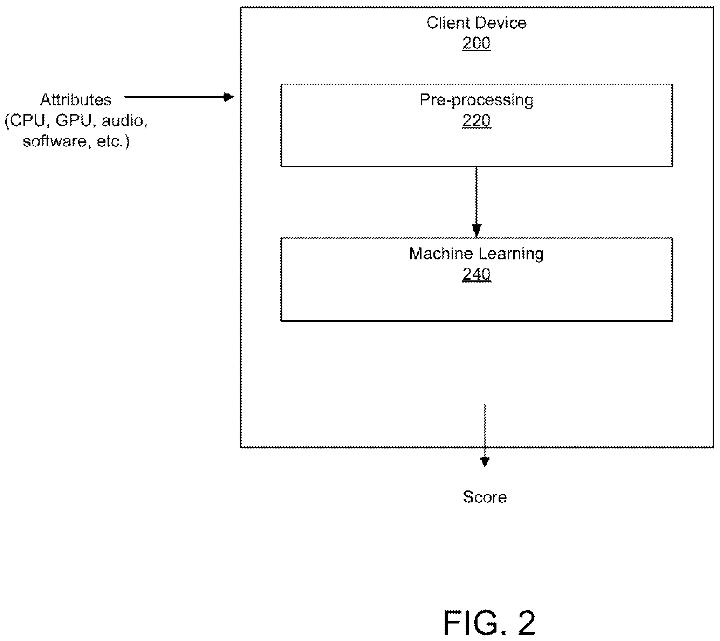

**FIG. 2** schematically illustrates the client device 200. in accordance with some embodiments of the disclosure. The client device 200 may include a pre-processing module 220 and a machine learning module 240.

The pre-processing module 220 can execute one or more mathematical functions using the CPU or GPU in order to produce additional device attributes. The browser may use web technologies to interact with hardware components to execute the functions, causing the CPU or GPU to produce deterministic results in response to inputs, or challenges. The results produced may be reproducible even if they are randomized, enabling machine learning to be able to identify particular CPUs or GPUs from the particular results they produce when executing the one or more functions. The states of the CPUs or GPUs after executing the functions, or the outputs of the functions themselves, may serve as additional device attributes. For example, one device may produce a pattern of outputs from a function that is a distinct and different from patterns produced by other functions. A device may use more processing power to implement a function than another or may execute the function more quickly or more slowly than the other device. One class of functions may be mathematical polynomial functions (e.g., polynomial random number generator functions), which may produce pseudorandom numbers by implementing polynomial functions on seed input values. Additionally, the pre-processing module can execute matrix-based functions on the GPU, such as dot products or the like. The mathematical functions may be written in JavaScript or WebAssembly. Web assembly functions may be written in a C programming language and compiled to WebAssembly for faster execution speeds. The pre-processing module may choose functions based at least in part on efficiency and robustness. An efficient function may be a function in which the same input produces the same output for several different test cases. A robust function may be a function that has an output with a large fault tolerance even when there are CPU or GPU spikes (e.g., when a CPU or GPU-hungry application is executing at the same time as the function).

Additional functions executed by the pre-processing module may be measurement functions, which may produce more accurate timers for user devices where multiple browsers are used by one or more users. For example, one browser may have a smaller timing resolution than another, and the measurement function may provide a standard timing resolution across browsers. This may produce more consistent results when the system implements machine learning on timing data captured from the browsers. Another function the pre-processing module 220 may implement is a crypto function for preserving the security of the machine learning model. The crypto function may use the web crypto API to store key material to an index database (e.g., IndexedDB) of the browser. The key material may include a partial private key (i.e., a portion of a private key) and an encrypted parameter, coefficient value, and/or metadata of the machine learning model. The parameter, coefficient value, and/or metadata of the machine learning model may be specifically tuned for the device in question. When a request is made to a server, the crypto function may use the partial private key (herein referred to interchangeably as "partial key") to establish a secure connection and enable the server to send the other half of the key. The combined key may then be used to decrypt parameters of the model. If the parameters are inadvertently deleted (e.g., if the browser cache is cleared), the server side machine learning algorithm can still execute and produce an output. In such a scenario, the device (e.g., a client device) may provide metadata about the deletion or corruption to the server.

Additionally, the pre-processing module 220 may use a noise reduction algorithm to account for noise produced by different browsers. This may serve as a method of normalization, to ensure that data collected on different browsers may produce the same score for a particular device.

The machine learning module 240 can generate a score using the various attributes described above, including attributes produced from implementing the functions. The score may serve a unique fingerprint of the client device 200. The machine learning module 240 may implement a machine learning algorithm such as a neural network (e.g., a convolutional neural network (CNN) or a recurrent neural network (RNN).) The neural network may be a long short-term memory (LSTM) network. The machine learning algorithm may also be a deep neural network, implementing multiple layers of neural networks. The machine learning algorithm may alternatively be a tree-based algorithm, such as a gradient boosted tree, a support vector machine, a logistic regression, analysis of variance (ANOVA), a moving average, a Kolmogorov-Smirnov test, or another type of algorithm. The machine learning algorithm may be an unsupervised machine learning algorithm (e.g., principal component analysis or cluster analysis).

The machine learning module 240 produces a score unique to the client device from which the browser collects attributes and on which the browser performs functions. The score may be produced from weighting and mathematically combining the various attributes of the device. The machine learning algorithm may be trained on various types of devices in different configurations and using different browsers, to ensure that it produces scores that are reproducible regardless of browser used. For example, the machine learning algorithm may be executed multiple times on the same device using information collected from MOZILLA^{®} FIREFOX, GOOGLE^{®} CHROME, and MICROSOFT^{®} INTERNET EXPLORER, in order to train the machine learning algorithm to calculate identical scores on the data collected from the different browsers. Additionally, the machine learning algorithm may be trained to produce the same score on data collected using different types of web technologies, from browsers running for different time intervals, or during changes in the device environment (e.g., when the CPU is under heavy load from other processes running on the device). To train the algorithm, a single device may be used as a ground truth, and different experimental contexts may be set up to test execution of the machine learning algorithm.

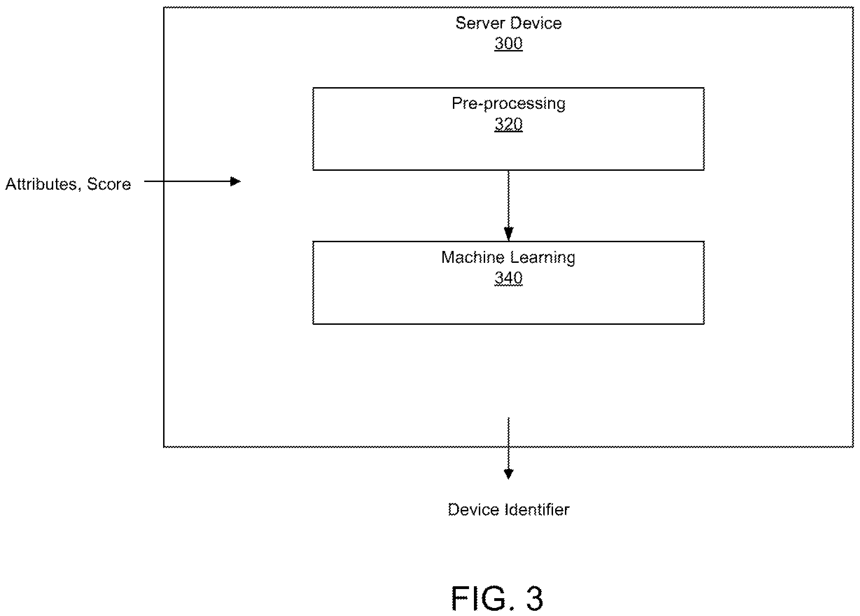

**FIG. 3** schematically illustrates the server device 300 in accordance with an embodiment. The server device 300 may include a pre-processing module 320 and a machine learning module 340.

The pre-processing module 320 may perform pre-processing functions on the attributes and the score from the client device 200. The pre-processing functions may include profile refinement, aggregation, and normalization. For example, pre-processing may remove missing, corrupt, noisy, spurious, or outlier data items. These outliers may be caused by browser noise, CPU or GPU overload, latency, or other network issues. The pre-processing module 320 may recognize such data from patterns in collecting attributes from many computing devices, and may smooth, average, or remove such data. Additionally, the pre-processing module may determine whether duplicate attribute data points exist and may remove these duplicates. The pre-processing module 320 may convert data into a suitable format for machine learning. Additionally, the pre-processing module 320 may label the data upon aggregation, in order for the data to be analyzed by supervised machine learning algorithms implemented server-side. The pre-processing module 320 may also select the type of machine learning algorithm to be used (e.g., an RNN).

The machine learning module 340 can implement one or more machine learning algorithms on the pre-processed device attributes and the score. The machine learning algorithm may determine whether the device is new or has been encountered before according to a heuristic-based scorecard. For example, the scorecard may include one or more items, which may be represented by binary variables. The machine learning algorithm may be a binary or multiclass classifier trained to predict the existence of these heuristics from the attributes and the score from the client device. If a threshold number of heuristics are present, the machine learning algorithm may predict that the device has been encountered before. The server may store data related to whether the device, or a device with the score or particular attributes, made a connection with the server through a network or link. The server may be trained to match the client device's attributes and score with a log of devices that have contacted the server. Additionally, contact with the server may prompt the web browser to store attribute data on the client device. This attribute data may be provided again to the server and used in machine learning analysis. Additionally, the server may ascertain whether the device has been encountered by observing the results produced by the mathematical functions.

The machine learning algorithm may be trained to produce a prediction as to whether the device has been encountered. The score may be, for example, a softmax probability between 0 and 1. The machine learning algorithm may be trained on control devices that have been encountered and on devices that have not been encountered. When the trained algorithm is tested on devices, it may be able to correctly identify, with a certain confidence, previously encountered devices based on the feature analysis it has been trained to perform.

If the server 300 ascertains it has encountered the client device before, it may generate a new device identifier using a random number generator (e.g., a linear congruential generator). Otherwise, it may generate an additional score for the device. The server 300 may keep a log of generated scores for repeated contacts with a particular client device.

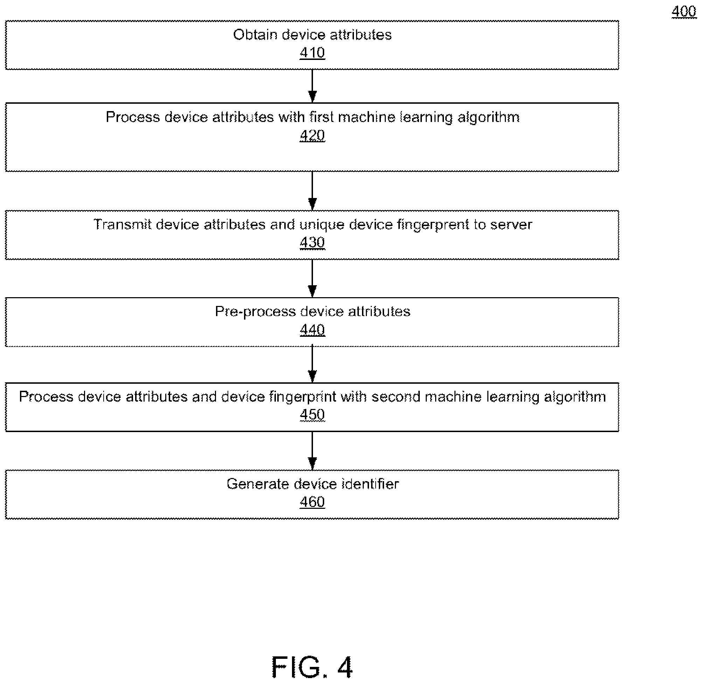

**FIG. 4** is a flow chart of a process 400 for determining a unique identifier of a device. The process 400 can be performed by a system of one or more appropriately programmed computers in one or more locations. For example, the process 400 can be performed in part by the device and in part by a server communicatively coupled to the device. Technologies such as HTML5, Web Assembly, WebGL and others can be used to facilitate communication between the device and the server and to allow the server to interact in a more direct manner with hardware components of the device, as described in greater detail below.

In an operation of process 400, the system can obtain a plurality of device attributes (410). Individual device attributes may or may not be unique to the device. However, in combination, the plurality of device attributes may uniquely identify the device. The device attributes may be or include attributes of the central processing unit (CPU) or graphics processing unit (GPU) of the device, attributes of software running on the device, audio attributes, context attributes, and the like.

### CPU and GPU attributes

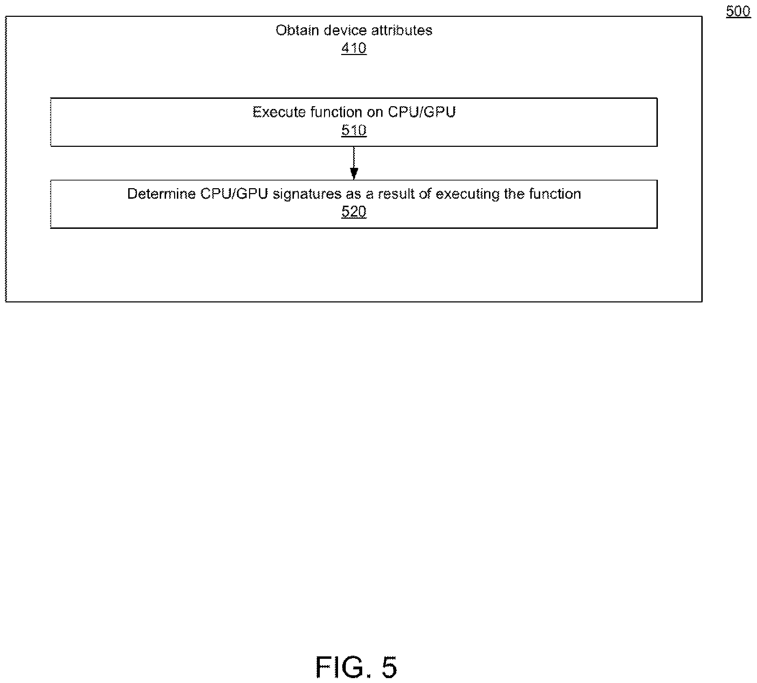

The CPU or GPU attributes may include the states of particular storage components in the CPU or GPU after executing a function on the CPU or GPU, as described in more detail in reference to **FIG. 5****.** The storage components may be flip-flops, buffers (e.g., registers), arrays, cache memory, main memory, secondary memory, or the like. The storage components may be implemented with read-only memory (ROM), random-access memory (RAM) (e.g., static random-access memory (SRAM) or dynamic random-access memory (DRAM)), flash memory, or the like.

The CPU or GPU attributes may also include the states of particular logic components in the device. The logic components may be transistors, look-up tables, or the like.

The CPU or GPU attributes may also include configurations of the CPU or GPU. The configurations may be pre-set values that are used to perform processes on the CPU or CPU. The pre-set values may include a quantity of iterations of a function or a quantity of random bytes allocated to the browser per iteration.

The CPU or GPU attributes may also include the presence or absence of the AES-NI instruction that gives hardware-level support to AES block-cipher.

The CPU or GPU attributes may also include performance characteristics, such as processor make, processor model, computing speed, clock frequency, instructions per cycle, cache, number of processing cores, or bandwidth.

**FIG. 5** is a flow chart of a process 500 for generating the above-mentioned CPU or GPU attributes. The process 500 can be performed by a system of one or more appropriately programmed computers in one or more locations.

In an operation of process 500, the system can execute a mathematical function that results in the CPU or the GPU having a unique and deterministic state (e.g., as defined by the states of its storage components and logic components) (510). That is, the state of the CPU or the GPU may be the same after every execution of the mathematical function. The mathematical function can be provided through an application programming interface (API) of a web browser running on the device. The mathematical function may be written in JavaScript or WebAssembly. WebAssembly functions may be written in a C programming language and compiled to WebAssembly and may execute faster than functions written in other languages. WebAssembly may also provide better access to memory, which may allow the system described herein to generate a more fine-grain CPU/GPU fingerprint. More accurate timers may be used for the mathematical function. Certain web browsers may exceed the time resolution of the official timing sources of the browser which results in rounding errors. The mathematical function may provide more accurate timing implementation with resolution that leads to consistent results to help the machine learning function with correlation across different browsers using the same machine.

In general, the mathematical function may be a physical unclonable function. A physical unclonable function is a function that generates a physically defined output or state that serves as a unique identifier.

The mathematical function may be a polynomial function. The polynomial function may be a random number generator. The random number generator may be a computational random number generator. For example, the random number generator may be a linear congruential generator defined by the function Xₙ₊₁ = (aXₙ + b)mod(m). The linear congruential generator can generate a sequence of numbers with good random properties, but the sequence may be deterministic in that it is based on a seed value. Repeated execution of the linear congruential generator may result in repetition of the sequence of numbers that causes the CPU or GPU to have a unique and deterministic state.

The mathematical function may be a matrix function. The matrix function may be a dot product or a matrix manipulation with eigenvalues. Repeated calls to the matrix function may result in the CPU or GPU having a unique and deterministic state.

The mathematical function may be a graphics rendering function. The graphics rendering function may create particular graphic objects for a browser to render. Through the rendering process, the graphics rendering function may identify particular features of the device upon which the browser is installed.

In some cases, the mathematical function may be a combination of the above-mentioned functions (e.g., a function of the above-mentioned functions).

After executing the mathematical function, the system can determine attributes of the CPU or GPU (520). The CPU or GPU attributes may be states of certain storage or logic components within the CPU or GPU, as described in greater detail above. As mentioned above, the system can use technologies such as HTML5, Web Assembly, WebGL, and others so that the web browser running on the device can interact in a more direct manner with the hardware components of the device to determine the CPU and GPU attributes.

### Software attributes

Returning to **FIG. 4****,** the device attributes may include attributes of software running on the device. The software may be, for example, a web browser. The software attributes may include a set of key-value pairs available via browser APIs, such as a navigator API. The key-value pairs may include user-agent strings, color depths, memory, available CPUs , time zone, and GPU information.

### Audio attributes

The device attributes may include audio attributes. The audio attributes may include parameters required to trigger an audio API (e.g., Web Audio API). The parameters may include an initial volume, a minimum volume, a maximum volume, equalizer settings (e.g., bass, treble, midrange), dynamic range, spectrogram information, and the like.

### Context attributes

The device attributes may include context attributes. The context attributes may indicate the time, whether the web page on which the JavaScript is running has been modified by malware, if the browser is running on a virtual machine, a number of browser extensions installed on the browser, or the like.

The device can process all or a subset of all of the above-mentioned device attributes with a first machine learning algorithm (420). The first machine learning algorithm may be a function that defines how the various device attributes are combined and weighted. The first machine learning algorithm can generate an output (e.g., a score) that serves as a unique fingerprint of the device. The output may be a number or a vector.

The first machine learning algorithm may be or include an unsupervised machine learning algorithm. The unsupervised machine learning algorithm may be an autoencoder. The autoencoder may have an encoder that is configured to generate a latent space representation of the device attributes and a decoder that is configured to reconstruct the device attributes from the latent space representation. A latent space representation may be a compressed or reduced-dimensionality representation of the set of device attributes, where attributes that are more similar to one another may be closer together in a latent space. The autoencoder may be a neural network. The neural network may be a feed-forward neural network, or it may be a convolutional or recurrent neural network. The autoencoder can be trained by providing examples of device attributes to an untrained or partially trained version of the autoencoder. The untrained or partially trained version of the autoencoder can encode the examples of device attributes as latent space representations and decode the latent space representations to generate reconstructions of the examples. The reconstructions can be compared to the actual device attributes, and if there is a difference, the parameters of the autoencoder can be updated (e.g., through backpropagation with gradient descent). The latent space representation of the device attributes can serve as the unique fingerprint of the device.

The unsupervised machine learning algorithm may be a dimensionality reduction algorithm. In general, dimensionality reduction algorithms can transform data with a large number of dimensions into data with a smaller number of dimensions. For example, a dimensionality reduction algorithm can transform data representing a large number of device attributes to data with a smaller number of dimensions. The dimensionality reduction algorithm may be a manifold learning algorithm, t-distributed stochastic neighbor embedding (t-SNE), uniform manifold approximation, an autoencoder, a neural network, or the like.

The first machine learning algorithm may include a noise reduction algorithm. The noise reduction algorithm can identify and remove noise introduced by a browser. The noise may be a browser or operating system version update, a spike in the spectrogram of an audio signal, or a spike in CPU or GPU usage due to heavy input/output activities, for example. Removing this noise may be necessary to ensure that the machine learning algorithm generates reliable outputs (e.g., consistently generates the same output for the same device).

The first machine learning algorithm may be implemented on the device itself, and operation 420 may be performed entirely on the device. The device can obtain the parameters of the first machine learning algorithm from a server. Parameters may be configuration variables internal to the machine learning algorithms that may be determined through training the machine learning algorithm. Examples of parameters include neural network weights, support vectors, and regression (e.g., linear or logistic) coefficients. To exchange the parameters of the first machine learning algorithm, the server and the device can establish a cryptographically secure connection through a browser API (e.g., Web Cryptography API). The browser API can perform cryptographic functions without allowing the device to directly access to cryptographic keys. The browser API can store a partial private key and encrypted parameters of the first machine learning algorithm. When the device requests the parameters from the server, the server can send the remaining portion of the private key. Thereafter, the browser API can decrypt the parameters of the machine learning model and provide them to the device.

The device can transmit the device attributes and the unique device fingerprint generated by the first machine learning algorithm to the server (430).

The server can pre-process the device attributes (440). The pre-processing may involve refinement, aggregation, and normalization. These processes may include repackaging, standardizing, combining, or scaling the data into one or more formats which may be processed by one or more machine learning algorithms,

Following the pre-processing, the server can process the device attributes and the unique device fingerprint with a second machine learning algorithm (450). The second machine learning algorithm may be trained to determine whether the device attributes and the unique device fingerprint represent a new device or a previously identified device. The second machine learning algorithm can generate a plurality of similarity scores. The plurality of similarity scores may indicate the similarity of the device to a plurality of previously identified devices. If one of the similarity scores exceeds a threshold, the server may determine that the device is a previously identified device.

The second machine learning algorithm may be an unsupervised machine learning algorithm. For example, the second machine learning algorithm may be a clustering algorithm. In general, clustering algorithms can group data sets in such a way that similar data sets are in the same group while dissimilar data sets in different groups. The physical distance between two data sets (e.g., as determined by the cosine similarity of the two data sets) may indicate their similarity. This property can be applied to two or more sets of device attributes and digital fingerprints to determine if they represent the same device. The clustering algorithm may be a hierarchical clustering algorithm. A hierarchical clustering algorithm is a clustering algorithm that clusters objects based on their proximity to other objects. Alternatively, the clustering algorithm may be a centroid-based clustering algorithm, e.g., a k-means clustering algorithm. A k-means clustering algorithm can partition n observations into k clusters, where each observation belongs to the cluster with the nearest mean. The mean may serve as a prototype for the cluster. In the context of this disclosure, a k-means clustering algorithm can generate distinct groups of device attributes that are related to each other. Alternatively, the clustering algorithm can alternatively be a distribution-based clustering algorithm, e.g., a Gaussian mixture model or expectation maximization algorithm. Examples of other clustering algorithms that are cosine similarity algorithms, topological data analysis algorithms, and hierarchical density-based clustering of applications with noise (HDB-SCAN).

The second machine learning algorithm may be a supervised machine learning algorithm. For example, the second machine learning algorithm may be a classifier that is trained to determine whether two sets of device attributes and digital fingerprints represent the same device. The classifier may be a binary classifier that generates a probabilistic score. Other examples of supervised machine learning algorithms are decision trees, support vector machines, Bayesian networks, and the like. The second machine learning algorithm may be a long short-term memory network (LSTM). The LSTM may analyze time-series data collected from the browser and selectively "remember" and "forget" data elements and features that may be more or less predictive as to whether the server has encountered the device. Time-series data analyzed by the machine learning algorithm may include statistics collected from browser use, with their associated timestamps. In general, data collected more recently may be considered to be more predictive, but more weight may be given to particular classes of data items. For example, particular combinations of hardware attributes (e.g., make and model of processor) with particular browsing activities may be of greatest interest to the machine learning model.

If the server determines that a device is new, it can generate a DeviceID for the device (460). The server can generate the DeviceID using a linear congruential generator, for example.

### Neural networks

The present disclosure describes the use of machine learning algorithms to generate unique device fingerprints and determine whether a device is a new or existing device. The machine learning algorithms may be neural networks. Neural networks may employ multiple layers of operations to predict one or more outputs (e.g., whether a device is new) from one or more inputs (e.g., a unique device fingerprint and device attributes). Neural networks may include one or more hidden layers situated between an input layer and an output layer. The output of each layer can be used as input to another layer, e.g., the next hidden layer or the output layer. Each layer of a neural network may specify one or more transformation operations to be performed on input to the layer. Such transformation operations may be referred to as neurons. The output of a particular neuron may be a weighted sum of the inputs to the neuron, adjusted with a bias and multiplied by an activation function, e.g., a rectified linear unit (ReLU) or a sigmoid function. The output layer of a neural network may be a softmax layer that is configured to generate a probability distribution over two or more output classes.

Training a neural network may involve providing inputs to the untrained neural network to generate predicted outputs, comparing the predicted outputs to expected outputs, and updating the algorithm's weights and biases to account for the difference between the predicted outputs and the expected outputs. Specifically, a cost function may be used to calculate a difference between the predicted outputs and the expected outputs. By computing the derivative of the cost function with respect to the weights and biases of the network, the weights and biases may be iteratively adjusted over multiple cycles to minimize the cost function. Training may be complete when the predicted outputs satisfy a convergence condition, e.g., a small magnitude of calculated cost as determined by the cost function.

### Computer systems

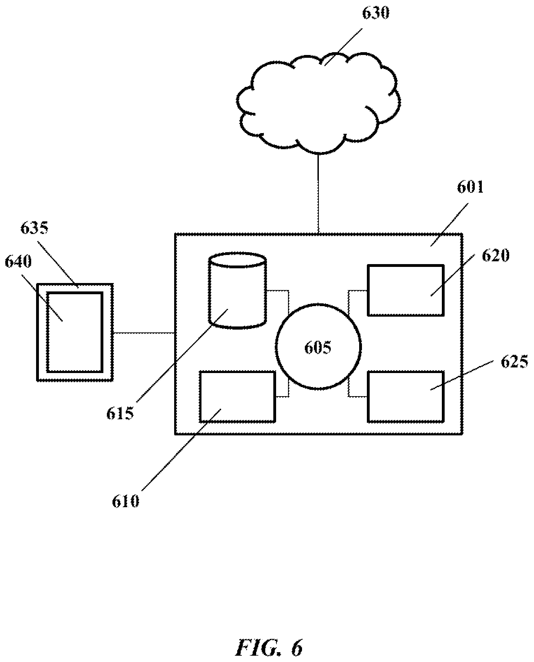

The present disclosure provides computer systems that are programmed to implement methods of the disclosure. **FIG. 6** shows a computer system 601 that is programmed or otherwise configured to determine a unique device identifier. The computer system 601 can regulate various aspects of determining a unique identifier of the present disclosure, such as, for example, implementing a machine learning algorithm. The computer system 601 can be an electronic device of a user or a computer system that is remotely located with respect to the electronic device. The electronic device can be a mobile electronic device.

The computer system 601 includes a central processing unit (CPU, also "processor" and "computer processor" herein) 605, which can be a single core or multi core processor, or a plurality of processors for parallel processing. The computer system 601 also includes memory or memory location 610 (e.g., random-access memory, read-only memory, flash memory), electronic storage unit 615 (e.g., hard disk), communication interface 620 (e.g., network adapter) for communicating with one or more other systems, and peripheral devices 625, such as cache, other memory, data storage and/or electronic display adapters. The memory 610, storage unit 615, interface 620 and peripheral devices 625 are in communication with the CPU 605 through a communication bus (solid lines), such as a motherboard. The storage unit 615 can be a data storage unit (or data repository) for storing data. The computer system 601 can be operatively coupled to a computer network ("network") 630 with the aid of the communication interface 620. The network 630 can be the Internet, an internet and/or extranet, or an intranet and/or extranet that is in communication with the Internet. The network 630 in some cases is a telecommunication and/or data network. The network 630 can include one or more computer servers, which can enable distributed computing, such as cloud computing. The network 630, in some cases with the aid of the computer system 601, can implement a peer-to-peer network, which may enable devices coupled to the computer system 601 to behave as a client or a server.

The CPU 605 can execute a sequence of machine-readable instructions, which can be embodied in a program or software. The instructions may be stored in a memory location, such as the memory 610. The instructions can be directed to the CPU 605, which can subsequently program or otherwise configure the CPU 605 to implement methods of the present disclosure. Examples of operations performed by the CPU 605 can include fetch, decode, execute, and writeback.

The CPU 605 can be part of a circuit, such as an integrated circuit. One or more other components of the system 601 can be included in the circuit. In some cases, the circuit is an application specific integrated circuit (ASIC).

The storage unit 615 can store files, such as drivers, libraries and saved programs. The storage unit 615 can store user data, e.g., user preferences and user programs. The computer system 601 in some cases can include one or more additional data storage units that are external to the computer system 601, such as located on a remote server that is in communication with the computer system 601 through an intranet or the Internet.

The computer system 601 can communicate with one or more remote computer systems through the network 630. For instance, the computer system 601 can communicate with a remote computer system of a user (e.g., a mobile computing device). Examples of remote computer systems include personal computers (e.g., portable PC), slate or tablet PC's (e.g., Apple^{®} iPad, Samsung^{®} Galaxy Tab), telephones, Smart phones (e.g., Apple^{®} iPhone, Android-enabled device, Blackberry^{®}), or personal digital assistants. The user can access the computer system 601 via the network 630.

Methods as described herein can be implemented by way of machine (e.g., computer processor) executable code stored on an electronic storage location of the computer system 601, such as, for example, on the memory 610 or electronic storage unit 615. The machine executable or machine-readable code can be provided in the form of software. During use, the code can be executed by the processor 605. In some cases, the code can be retrieved from the storage unit 615 and stored on the memory 610 for ready access by the processor 605. In some situations, the electronic storage unit 615 can be precluded, and machine-executable instructions are stored on memory 610.

The code can be pre-compiled and configured for use with a machine having a processor adapted to execute the code or can be compiled during runtime. The code can be supplied in a programming language that can be selected to enable the code to execute in a pre-compiled or as-compiled fashion.

Aspects of the systems and methods provided herein, such as the computer system 601, can be embodied in programming. Various aspects of the technology may be thought of as "products" or "articles of manufacture" typically in the form of machine (or processor) executable code and/or associated data that is carried on or embodied in a type of machine readable medium. Machine-executable code can be stored on an electronic storage unit, such as memory (e.g., read-only memory, random-access memory, flash memory) or a hard disk. "Storage" type media can include any or all of the tangible memory of the computers, processors or the like, or associated modules thereof, such as various semiconductor memories, tape drives, disk drives and the like, which may provide non-transitory storage at any time for the software programming. All or portions of the software may at times be communicated through the Internet or various other telecommunication networks. Such communications, for example, may enable loading of the software from one computer or processor into another, for example, from a management server or host computer into the computer platform of an application server. Thus, another type of media that may bear the software elements includes optical, electrical and electromagnetic waves, such as used across physical interfaces between local devices, through wired and optical landline networks and over various air-links. The physical elements that carry such waves, such as wired or wireless links, optical links or the like, also may be considered as media bearing the software. As used herein, unless restricted to non-transitory, tangible "storage" media, terms such as computer or machine "readable medium" refer to any medium that participates in providing instructions to a processor for execution.

Hence, a machine readable medium, such as computer-executable code, may take many forms, including but not limited to, a tangible storage medium, a carrier wave medium or physical transmission medium. Non-volatile storage media include, for example, optical or magnetic disks, such as any of the storage devices in any computer(s) or the like, such as may be used to implement the databases, etc. shown in the drawings. Volatile storage media include dynamic memory, such as main memory of such a computer platform. Tangible transmission media include coaxial cables; copper wire and fiber optics, including the wires that comprise a bus within a computer system. Carrier-wave transmission media may take the form of electric or electromagnetic signals, or acoustic or light waves such as those generated during radio frequency (RF) and infrared (IR) data communications. Common forms of computer-readable media therefore include for example: a floppy disk, a flexible disk, hard disk, magnetic tape, any other magnetic medium, a CD-ROM, DVD or DVD-ROM, any other optical medium, punch cards paper tape, any other physical storage medium with patterns of holes, a RAM, a ROM, a PROM and EPROM, a FLASH-EPROM, any other memory chip or cartridge, a carrier wave transporting data or instructions, cables or links transporting such a carrier wave, or any other medium from which a computer may read programming code and/or data. Many of these forms of computer readable media may be involved in carrying one or more sequences of one or more instructions to a processor for execution.

The computer system 601 can include or be in communication with an electronic display 635 that comprises a user interface (UI) 640 for providing, for example, a unique device identifier. Examples of UI's include, without limitation, a graphical user interface (GUI) and web-based user interface.

Methods and systems of the present disclosure can be implemented by way of one or more algorithms. An algorithm can be implemented by way of software upon execution by the central processing unit 605. The algorithm can, for example, analyze attribute data to produce a unique device identifier.

While preferred embodiments of the present invention have been shown and described herein, it will be obvious to those skilled in the art that such embodiments are provided by way of example only.

## Claims

1. A method for uniquely identifying a hardware device, comprising:
(a) obtaining a first partial key and a plurality of encrypted parameters from a database implemented on said hardware device and a second partial key from a remote server;
(b) decrypting said plurality of encrypted parameters using said first partial key and said second partial key, to thereby generate a plurality of decrypted parameters;
(c) obtaining a plurality of attributes of said hardware device, wherein said plurality of attributes comprises a state of a central processing unit (CPU) or a graphics processing unit (GPU) of said hardware device;
(d) processing, on said hardware device, said plurality of attributes with a first machine learning algorithm to generate a digital fingerprint of said hardware device, wherein said first machine learning algorithm comprises said plurality of decrypted parameters; and
(e) processing, on said remote server, at least said digital fingerprint of said hardware device and said plurality of attributes with a second machine learning algorithm configured to determine whether said hardware device has been previously identified.

2. The method of claim 1, further comprising, prior to (c), executing a function on said CPU or said GPU of said hardware device through an application programming interface (API) of a web browser.

3. The method of claim 2, further comprising, subsequent to executing said function, identifying said state of said CPU or said GPU; optionally wherein said state of said CPU or GPU comprises a state of (i) a storage component of said CPU or GPU or (ii) a logic component of said CPU or GPU.

4. The method of claim 2, wherein said function is selected from the group consisting of a polynomial function, a random number generator, a matrix function, a graphics rendering function, a physical unclonable function, and a combination thereof.

5. The method of claim 1, wherein said plurality of attributes comprises an attribute of software running on said hardware device; optionally wherein said software is a web browser.

6. The method of claim 5, wherein said attribute is selected from the group consisting of a user-agent string, a color depth, a memory, a CPU allocation, and a time zone.

7. The method of claim 1, wherein said plurality of attributes comprises an audio attribute comprising a parameter required to trigger an audio API.

8. The method of claim 2, wherein said plurality of attributes number of iterations of said function or a number of bytes allocated per iteration.

9. The method of claim 1, wherein said first machine learning algorithm is an unsupervised machine learning algorithm, optionally wherein said unsupervised machine learning algorithm is an autoencoder.

10. The method of claim 1, further comprising, prior to (e), transmitting said digital fingerprint and said plurality of attributes to said remote server.

11. The method of claim 10, wherein said second machine learning algorithm is configured to generate a score that indicates a similarity between said hardware device and a previously identified hardware device.

12. The method of claim 10, further comprising, if said hardware device has not been previously identified, generating a unique device identifier for said hardware device.

13. The method of claim 1, wherein said second machine learning algorithm is a classifier or a clustering algorithm.

14. The method of claim 1, wherein said database is implemented via a web browser API.

15. The method of claim 1, wherein said first machine learning algorithm comprises a noise reduction algorithm.

## Patentansprüche

1. Ein Verfahren zum eindeutigen Identifizieren einer Hardwarevorrichtung, das Folgendes beinhaltet:
(a) Erhalten eines ersten Teilschlüssels und einer Vielzahl von verschlüsselten Parametern aus einer Datenbank, die auf der Hardwarevorrichtung implementiert ist, und eines zweiten Teilschlüssels von einem entfernten Server;
(b) Entschlüsseln der Vielzahl von verschlüsselten Parametern unter Verwendung des ersten Teilschlüssels und des zweiten Teilschlüssels, um dadurch eine Vielzahl von entschlüsselten Parametern zu erzeugen;
(c) Erhalten einer Vielzahl von Attributen der Hardwarevorrichtung, wobei die Vielzahl von Attributen einen Zustand einer zentralen Verarbeitungseinheit (CPU) oder einer Grafikverarbeitungseinheit (GPU) der Hardwarevorrichtung beinhaltet;
(d) Verarbeiten, auf der Hardwarevorrichtung, der Vielzahl von Attributen mit einem ersten Maschinenlernalgorithmus, um einen digitalen Fingerabdruck der Hardwarevorrichtung zu erzeugen, wobei der erste Maschinenlernalgorithmus die Vielzahl von entschlüsselten Parametern beinhaltet; und
(e) Verarbeiten, auf dem entfernten Server, mindestens des digitalen Fingerabdrucks der Hardwarevorrichtung und der Vielzahl von Attributen mit einem zweiten Maschinenlernalgorithmus, der konfiguriert ist, um zu bestimmen, ob die Hardwarevorrichtung zuvor identifiziert wurde.

2. Verfahren gemäß Anspruch 1, das ferner vor (c) das Ausführen einer Funktion auf der CPU oder der GPU der Hardwarevorrichtung durch eine Anwendungsprogrammierschnittstelle (API) eines Webbrowsers beinhaltet.

3. Verfahren gemäß Anspruch 2, das ferner nach dem Ausführen der Funktion das Identifizieren des Zustands der CPU oder der GPU beinhaltet; wobei optional der Zustand der CPU oder GPU einen Zustand von (i) einer Speicherkomponente der CPU oder GPU oder (ii) einer Logikkomponente der CPU oder GPU beinhaltet.

4. Verfahren gemäß Anspruch 2, wobei die Funktion aus der Gruppe ausgewählt ist, die aus einer Polynomfunktion, einem Zufallszahlengenerator, einer Matrixfunktion, einer Grafik-Rendering-Funktion, einer physischen unklonbaren Funktion und einer Kombination davon besteht.

5. Verfahren gemäß Anspruch 1, wobei die Vielzahl von Attributen ein Attribut von Software beinhaltet, die auf der Hardwarevorrichtung läuft; wobei optional die Software ein Webbrowser ist.

6. Verfahren gemäß Anspruch 5, wobei das Attribut aus der Gruppe ausgewählt ist, die aus einem User-Agent-String, einer Farbtiefe, einem Arbeitsspeicher, einer CPU-Zuweisung und einer Zeitzone besteht.

7. Verfahren gemäß Anspruch 1, wobei die Vielzahl von Attributen ein Audioattribut beinhaltet, das einen Parameter beinhaltet, der erforderlich ist, um eine Audio-API auszulösen.

8. Verfahren gemäß Anspruch 2, wobei die Vielzahl von Attributen Anzahl von Iterationen der Funktion oder eine Anzahl von pro Iteration zugewiesenen Bytes.

9. Verfahren gemäß Anspruch 1, wobei der erste Maschinenlernalgorithmus ein unüberwachter Maschinenlernalgorithmus ist, wobei optional der unüberwachte Maschinenlernalgorithmus ein Autoencoder ist.

10. Verfahren gemäß Anspruch 1, das ferner vor (e) das Übertragen des digitalen Fingerabdrucks und der Vielzahl von Attributen an den entfernten Server beinhaltet.

11. Verfahren gemäß Anspruch 10, wobei der zweite Maschinenlernalgorithmus konfiguriert ist, um einen Score zu erzeugen, der eine Ähnlichkeit zwischen der Hardwarevorrichtung und einer zuvor identifizierten Hardwarevorrichtung angibt.

12. Verfahren gemäß Anspruch 10, das ferner, wenn die Hardwarevorrichtung nicht zuvor identifiziert wurde, das Erzeugen eines eindeutigen Vorrichtungsidentifikators für die Hardwarevorrichtung beinhaltet.

13. Verfahren gemäß Anspruch 1, wobei der zweite Maschinenlernalgorithmus ein Klassifikator oder ein Clustering-Algorithmus ist.

14. Verfahren gemäß Anspruch 1, wobei die Datenbank über eine Webbrowser-API implementiert ist.

15. Verfahren gemäß Anspruch 1, wobei der erste Maschinenlernalgorithmus einen Rauschreduktionsalgorithmus beinhaltet.

## Revendications

1. Un procédé pour identifier de manière unique un dispositif matériel, comprenant :
(a) l'obtention d'une première clé partielle et d'une pluralité de paramètres chiffrés provenant d'une base de données implémentée sur ledit dispositif matériel et d'une deuxième clé partielle provenant d'un serveur distant ;
(b) le déchiffrement de ladite pluralité de paramètres chiffrés en utilisant ladite première clé partielle et ladite deuxième clé partielle, afin de générer de ce fait une pluralité de paramètres déchiffrés ;
(c) l'obtention d'une pluralité d'attributs dudit dispositif matériel, où ladite pluralité d'attributs comprend un état d'une unité centrale de traitement (CPU) ou d'une unité de traitement graphique (GPU) dudit dispositif matériel ;
(d) le traitement, sur ledit dispositif matériel, de ladite pluralité d'attributs avec un premier algorithme d'apprentissage automatique afin de générer une empreinte numérique dudit dispositif matériel, où ledit premier algorithme d'apprentissage automatique comprend ladite pluralité de paramètres déchiffrés ; et
(e) le traitement, sur ledit serveur distant, au moins de ladite empreinte numérique dudit dispositif matériel et de ladite pluralité d'attributs avec un deuxième algorithme d'apprentissage automatique configuré afin de déterminer si ledit dispositif matériel a été précédemment identifié.

2. Le procédé de la revendication 1, comprenant en outre, préalablement à (c), l'exécution d'une fonction sur ladite CPU ou ladite GPU dudit dispositif matériel par l'intermédiaire d'une interface de programmation d'application (API) d'un navigateur web.

3. Le procédé de la revendication 2, comprenant en outre, postérieurement à l'exécution de ladite fonction, l'identification dudit état de ladite CPU ou de ladite GPU ; facultativement où ledit état de ladite CPU ou GPU comprend un état (i) d'un composant de stockage de ladite CPU ou GPU ou (ii) d'un composant logique de ladite CPU ou GPU.

4. Le procédé de la revendication 2, où ladite fonction est sélectionnée dans le groupe constitué d'une fonction polynomiale, d'un générateur de nombres aléatoires, d'une fonction matricielle, d'une fonction de rendu graphique, d'une fonction physique non clonable, et d'une combinaison de ceux-ci.

5. Le procédé de la revendication 1, où ladite pluralité d'attributs comprend un attribut d'un logiciel tournant sur ledit dispositif matériel ; facultativement où ledit logiciel est un navigateur web.

6. Le procédé de la revendication 5, où ledit attribut est sélectionné dans le groupe constitué d'une chaîne d'agent utilisateur, d'une profondeur de couleur, d'une mémoire, d'une allocation de CPU, et d'un fuseau horaire.

7. Le procédé de la revendication 1, où ladite pluralité d'attributs comprend un attribut audio comprenant un paramètre requis afin de déclencher une API audio.

8. Le procédé de la revendication 2, où ladite pluralité d'attributs nombre d'itérations de ladite fonction ou un nombre d'octets alloués par itération.

9. Le procédé de la revendication 1, où ledit premier algorithme d'apprentissage automatique est un algorithme d'apprentissage automatique non supervisé, facultativement où ledit algorithme d'apprentissage automatique non supervisé est un autoencodeur.

10. Le procédé de la revendication 1, comprenant en outre, préalablement à (e), la transmission de ladite empreinte numérique et de ladite pluralité d'attributs audit serveur distant.

11. Le procédé de la revendication 10, où ledit deuxième algorithme d'apprentissage automatique est configuré afin de générer un score qui indique une similitude entre ledit dispositif matériel et un dispositif matériel précédemment identifié.

12. Le procédé de la revendication 10, comprenant en outre, si ledit dispositif matériel n'a pas été précédemment identifié, la génération d'un identifiant de dispositif unique pour ledit dispositif matériel.

13. Le procédé de la revendication 1, où ledit deuxième algorithme d'apprentissage automatique est un classifieur ou un algorithme de regroupement.

14. Le procédé de la revendication 1, où ladite base de données est implémentée par le biais d'une API de navigateur web.

15. Le procédé de la revendication 1, où ledit premier algorithme d'apprentissage automatique comprend un algorithme de réduction de bruit.
